# EUROPÄISCHE PATENTANMELDUNG

(11) **EP 3 410 361 A1**
(43) Veröffentlichungstag der Anmeldung: **05.12.2018**
(21) Anmeldenummer: 17173541.8
(22) Anmeldetag: 30.05.2017
(51) Int. Cl.: G06Q 10/04

(54) **VERFAHREN ZUR SIMULATION EINER TECHNISCHEN ANLAGE UND COMPUTERPROGRAMM MIT EINER IMPLEMENTATION DES VERFAHRENS**

(71) Anmelder: Siemens Aktiengesellschaft, 80333 München (DE)
(72) Erfinder: Dallmann, Michael, 90530 Wendelstein (DE); Quiros Araya, Gustavo, Plainsboro, 08536 (US)

(57) **Zusammenfassung**

Die Erfindung ist ein Verfahren zur Simulation einer technischen Anlage (10) und ein Computerprogramm (50) mit einer Implementation des Verfahrens, wobei die Simulation mittels eines automatisch erzeugten Synchronisationssignals (70) gestartet wird und das Synchronisationssignal (70) automatisch erzeugt wird, wenn für jeden für die Simulation relevanten Anlagenteil (12-18) der Anlage (10) sichergestellt ist, dass eine Einheit (22), deren Eintritt in den Bereich eines Anlagenteils (12-18) erfasst wurde, diesen Anlagenteil (12-18) wieder verlassen hat, wobei dies durch das Starten und Beenden jeweils eines Überwachungsfensters (62-68) für jeden Anlagenteil (12-18) überwacht wird, wobei das Überwachungsfenster (62-68) beim Eintritt einer Einheit (22) in den Bereich eines Anlagenteils (12-18) gestartet und beim Verlassen des Bereichs des Anlagenteils (12-18) beendet wird und wobei beim Beenden des letzten Überwachungsfensters (62-68) das Synchronisationssignal (70) erzeugt wird.

## Beschreibung

Die Erfindung betrifft ein Verfahren zur Simulation einer technischen Anlage sowie ein Computerprogramm mit einer Implementation des Verfahrens. Eine Simulation einer technischen Anlage dient vor deren Inbetriebnahme vor allem zur Verifikation einer zur Steuerung und/oder Überwachung der jeweiligen Anlage vorgesehenen Automatisierungslösung. Im Rahmen einer Simulation können Fehler in der Automatisierungslösung erkannt werden, ohne dass dies etwa zu Schäden in der Anlage oder dergleichen führt. Eine Simulation einer technischen Anlage kann aber auch zur Identifikation von Möglichkeiten zur Optimierung der jeweiligen Anlage sinnvoll sein.

Eine Schwierigkeit bei einer Simulation einer in Betrieb befindlichen Anlage besteht darin, die Simulation mit der realen Anlage zu synchronisieren.

Eine Aufgabe der vorliegenden Erfindung besteht darin, eine Möglichkeit zur einfachen und effizienten Synchronisation einer realen Anlage während des laufenden Betriebs mit einer Simulation der Anlage anzugeben. Nach der Synchronisation soll die Simulation alle für die Simulation relevanten, von der jeweiligen Anlage umfassten Anlagenteile sowie damit beim Betrieb der Anlage zum Beispiel transportierte Einheiten, wie Paletten oder dergleichen, simulieren, so dass zu jedem Zeitpunkt der Zustand in der Simulation dem Zustand der simulierten Anlage entspricht.

Diese Aufgabe wird erfindungsgemäß mittels eines Verfahrens zur Simulation einer technischen Anlage, zum Beispiel einer Kommissionierungsanlage oder dergleichen, mit den Merkmalen des Anspruchs 1 gelöst. Im Rahmen des Verfahrens ist Folgendes vorgesehen: Die Anlage wird fortwährend überwacht und es wird ein Zeitpunkt ermittelt, zu dem ausreichend Informationen zum Zustand der Anlage vorliegen, so dass die Simulation beginnen kann. Dann wird automatisch ein Synchronisationssignal erzeugt und damit die Simulation gestartet. Das Synchronisationssignal wird auf Basis einer Mehrzahl von Eingangsund Ausgangssignalen generiert. Ein Eingangssignal signalisiert einen Eintritt einer beim Betrieb der Anlage mittels der Anlage transportierten Einheit in den Bereich eines Anlagenteils. Bei einer solchen Einheit handelt es sich zum Beispiel um eine mittels der Anlage transportierte Palette. Ein Anlagenteil der Anlage ist zum Beispiel eine Fördervorrichtung in Form von oder nach Art eines Transportbands, Drehtellers oder dergleichen. Die Anlage umfasst eine Mehrzahl solcher Anlagenteile und der Zeitpunkt, zu dem ausreichend Informationen zum Zustand der Anlage vorliegen, ist ein Zeitpunkt, zu dem ausreichend Informationen zu jedem für die Simulation relevanten Anlagenteil der Anlage vorliegen. Ein Ausgangssignal signalisiert, wenn eine beim Betrieb der Anlage transportierte Einheit den Bereich eines Anlagenteils verlässt. Durch Überwachung der Ein- und Ausgangssignale ergeben sich also Informationen dahingehend, wann eine in der Anlage transportierte Einheit in den Bereich eines Anlagenteils gelangt und wann eine solche Einheit den Bereich des jeweiligen Anlagenteils wieder verlässt. Ein automatisch generiertes Startsignal löst den Beginn eines Synchronisationsintervalls sowie eine Überwachung solcher Eingangs- und Ausgangssignale aus. Während des Synchronisationsintervalls wird beim Erhalt eines ersten Eingangssignals für ein Anlagenteil für diesen Anlagenteil ein Überwachungsfenster gestartet. Ein während des Synchronisationsintervalls gestartetes Überwachungsfenster wird mit dem Erhalt eines Ausgangssignals für den betreffenden Anlagenteil beendet. Das Synchronisationsintervall wird beendet und das Synchronisationssignal wird erzeugt, wenn das letzte Überwachungsfenster beendet wird oder wenn das Ausgangssignal eingeht, welches das letzte Überwachungsfenster beendet.

Für die weitere Beschreibung gilt zur Vermeidung unnötiger Wiederholungen, dass Merkmale und Details, die im Zusammenhang mit dem genannten Verfahren sowie eventueller Ausgestaltungen beschrieben sind, selbstverständlich auch im Zusammenhang mit und im Hinblick auf ein zur Durchführung des Verfahrens eingerichtetes Computersystem (Computerhardware mit einer Softwareimplementation des Verfahrens) gelten. Folglich gelten Merkmale und Details, die im Zusammenhang mit dem gegenständlichen Verfahren und eventueller Ausgestaltungen beschrieben sind, selbstverständlich auch im Zusammenhang mit und im Hinblick auf ein zur Durchführung des Verfahrens bestimmtes Computersystem, derart, dass dieses Mittel, insbesondere Programmcodemittel, zur Ausführung der einzelnen Verfahrensschritte aufweist.

Der Vorteil der Erfindung besteht darin, dass durch die Überwachung der Eingangs- und Ausgangssignale einer Eingangs- und Ausgangssensorik des jeweiligen Anlagenteils oder einer Eingangssensorik des Anlagenteils und einer Eingangssensorik des nachfolgenden Anlagenteils sowie das Starten und Beenden jeweils eines Überwachungsfensters für jedes Anlagenteil ein Zeitpunkt ermittelt wird, ab dem der Zustand des jeweiligen Anlagenteils simuliert werden kann. Dieser Zeitpunkt bezieht sich allerdings nur auf die Möglichkeit zur Simulation eines einzelnen Anlagenteils. Indem überwacht wird, wann das letzte Überwachungsfenster beendet wird, ist ein Zeitpunkt bekannt, zu dem der Zustand sämtlicher für die Simulation relevanter Anlagenteile simuliert werden kann. Dies ist der gesuchte Zeitpunkt, zu dem eine Synchronisation der Simulation mit der zu simulierenden Anlage möglich ist. Folglich wird zu diesem Zeitpunkt das Synchronisationssignal erzeugt und die Simulation gestartet. Das Synchronisationsintervall, also der Zeitabschnitt, in dem der Zeitpunkt für die Möglichkeit zur Synchronisation der Simulation mit der Anlage gesucht wird, wird dann beendet.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Verfahrens wird zu jedem Signal der Eingangssensorik, welches nach Erhalt eines ersten, den Beginn eines Überwachungsfensters auslösenden Eingangssignals eingeht, für die das Signal auslösende Einheit und das jeweilige Anlagenteil ein Zeitstempel erfasst. Dieser erfasst den Zeitpunkt, zu dem nach dem Beginn eines Überwachungsfensters eine weitere Einheit in den Bereich des Anlagenteils gelangt, für den das Überwachungsfenster gestartet wurde. Eine solche Einheit muss gegebenenfalls schon von der später zu startenden Simulation berücksichtigt werden. Daher wird auf Basis eines solchen Zeitstempels und einer jeweiligen Transportgeschwindigkeit eines Anlagenteils für die Simulation der Anlage eine Position einer beim Betrieb der Anlage mittels der Anlage transportierten Einheit in oder auf dem jeweiligen Anlagenteil ermittelt.

Bei einer weiteren Ausführungsform des Verfahrens erfolgt die Erzeugung des Startsignals und des Synchronisationssignals automatisch durch ein zur Simulation der Anlage bestimmtes Simulationsprogramm, wobei jedes Eingangs- und Ausgangssignal von einer zur Steuerung und/oder Überwachung der Anlage bestimmten Automatisierungslösung an das Simulationsprogramm übermittelt wird.

Bei einer speziellen Ausführungsform des Verfahrens erfolgt die Übermittlung der Eingangs- und Ausgangssignale von der Automatisierungslösung an das Simulationsprogramm mittels einer Schnittstellenschicht, wobei mittels der Schnittstellenschicht eine Überwachung einzelner von der Automatisierungslösung verwendeter Speicherbereiche erfolgt. Eine solche Überwachung einzelner von der Automatisierungslösung verwendeter Speicherbereiche entkoppelt das Simulationsprogramm von der Automatisierungslösung. Zur Überwachung der von der Automatisierungslösung verwendeten Speicherbereiche durch die Schnittstellenschicht ist zum Beispiel vorgesehen, dass mittels der Schnittstellenschicht die Inhalte der überwachten Speicherbereiche regelmäßig ausgelesen werden (polling) und bei einer Änderung eines Inhalts eines Speicherbereichs ein Eingangs- oder Ausgangssignal für das Simulationsprogramm erzeugt wird.

Die oben genannte Aufgabe wird auch mittels eines Computersystems, ggf. auch eines verteilten Computersystems, gelöst, welches nach dem Verfahren wie hier und im Folgenden beschrieben arbeitet und dazu Mittel zur Durchführung des Verfahrens umfasst. Das im Folgenden beschriebene Verfahren ist zur automatischen Ausführung in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Computersystem, in dessen Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen. Zumindest bedeutet jede Verwendung des Begriffs "automatisch", dass die betreffende Aktion aufgrund des Computerprogramms oder unter Kontrolle des Computerprogramms erfolgt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen (jeweils schematisch vereinfacht)
- FIG 1: ein mittels eines Simulationsprogramms zu simulierendes Verteilzentrum mit einzelnen Fördervorrichtungen,
- FIG 2: Momentaufnahmen beim Transport einer Palette mittels einer Fördervorrichtung des Verteilzentrums gemäß FIG 1,
- FIG 3: Momentaufnahmen beim gleichzeitigen Transport mehrerer Paletten mittels einer Fördervorrichtung des Verteilzentrums gemäß FIG 1,
- FIG 4: eine Automatisierungslösung zur Steuerung und/oder Überwachung des Verteilzentrums gemäß FIG 1,
- FIG 5: ein zur Simulation des Verteilzentrums gemäß FIG 1 bestimmtes Simulationsprogramm,
- FIG 6: ein Zeitdiagramm als Basis des hier vorgeschlagenen Verfahrens zur Simulation einer technischen Anlage, zum Beispiel des Verteilzentrums gemäß FIG 1, und
- FIG 7: eine Schnittstellenschicht zur Entkopplung des Simulationsprogramms von einer zur Steuerung und/oder Überwachung des Verteilzentrums gemäß FIG 1 vorgesehenen Automatisierungslösung.

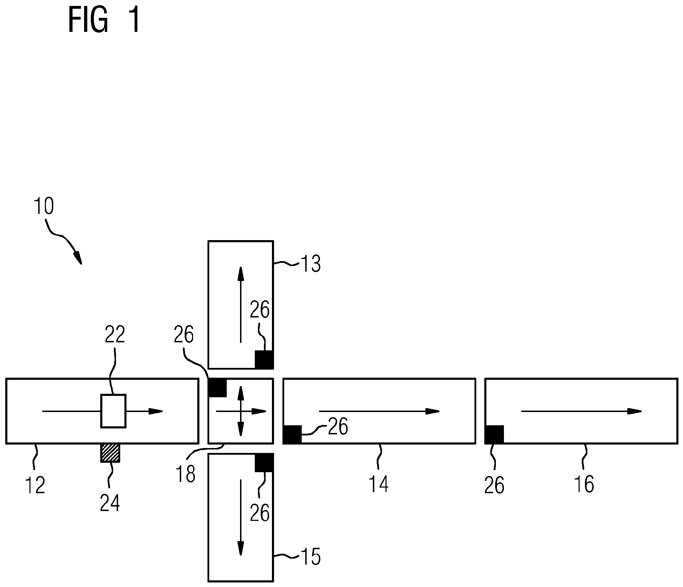

Die Darstellung in FIG 1 zeigt schematisch vereinfacht als Beispiel für eine automatisierte technische Anlage 10 ein Verteilzentrum, zum Beispiel ein Verteilzentrum einer Kommissionierungsanlage. Die Anlage 10 umfasst mehrere Fördervorrichtungen 12, 13, 14, 15, 16, zum Beispiel Fördervorrichtungen 12-16 in Form von Fließ- oder Transportbändern. Darüber hinaus umfasst die Anlage 10 in der dargestellten Konfiguration eine Drehvorrichtung 18, zum Beispiel eine Drehvorrichtung 18 in Form eines Drehtellers oder einer Drehscheibe. Die Fördervorrichtungen 12-16 werden zur Unterscheidung als erste Fördervorrichtung 12, zweite Fördervorrichtung 13, dritte Fördervorrichtung 14 usw. bezeichnet.

Mit jedem Anlagenteil (Fördervorrichtungen 12-16; Drehvorrichtung 18) ist eine in der Darstellung in FIG 1 durch Pfeile verdeutlichte Bewegungs-, Förder- oder Transportrichtung verbunden. In der jeweiligen Transportrichtung werden beim Betrieb der Anlage 10 Produkte, Produktteile oder Güter durch die Anlage 10 bewegt.

Als Beispiel für solche Produkte, Produktteile oder Güter oder allgemein eine mittels der Anlage 10 transportierte Einheit 22 ist in der Darstellung in FIG 1 schematisch vereinfacht eine Palette 22 gezeigt. Diese befindet sich auf der ersten Fördervorrichtung 12. Diese Fördervorrichtung 12 ist auch in Bezug auf die in der Anlage 10 herrschende Transportrichtung die erste oder eingangsseitige Fördervorrichtung 12. Von der ersten Fördervorrichtung 12 gelangt die Palette 22 bei der gezeigten Ausführungsform der Anlage 10 zu der Drehvorrichtung 18 und mittels der Drehvorrichtung 18 zu einer von mehreren nachfolgenden Fördervorrichtungen 13, 14, 15, nämlich entweder zu der zweiten Fördervorrichtung 13, zu der dritten Fördervorrichtung 14 oder zu der vierten Fördervorrichtung 15.

Zumindest im Bereich der ersten Fördervorrichtung 12 wird mittels einer Lese- und/oder Identifikationseinrichtung 24, zum Beispiel einer Lese- und/oder Identifikationseinrichtung 24 in Form eines Barcodelesers oder eines RFID-Lesegeräts, eine die Palette 22 identifizierende Kennung aufgenommen.

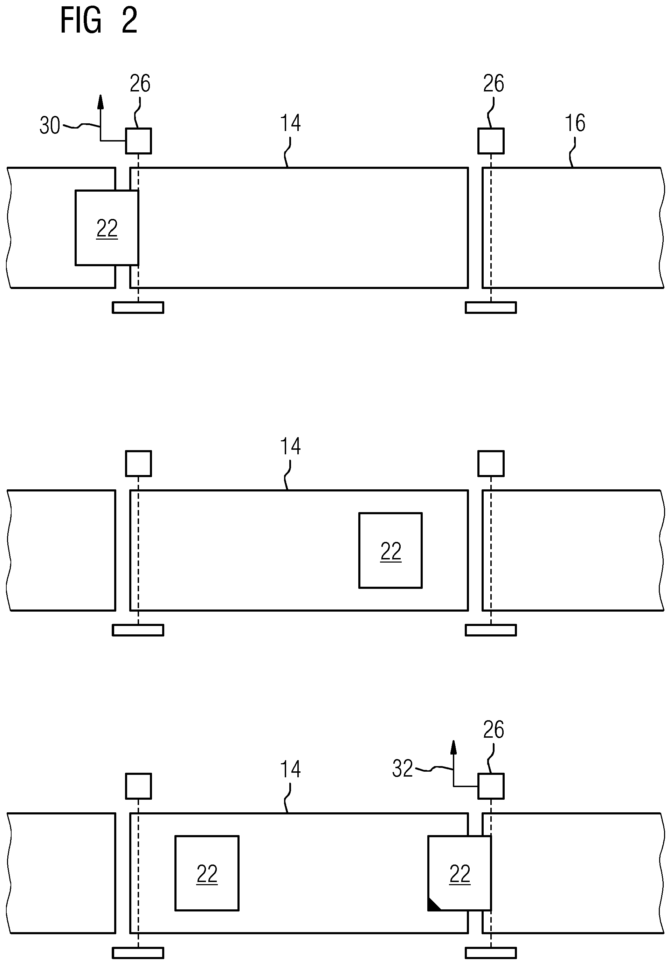

Jedem Anlagenteil 12-16; 18 oder zumindest jedem der ersten Fördervorrichtung 12 nachfolgenden Anlagenteil 13-16; 18 ist eingangsseitig eine als Eingangssensorik 26 fungierende Lichtschranke oder dergleichen zugeordnet, jedenfalls eine Vorrichtung, mittels derer ein Eintritt einer Palette 22 in den Bereich des jeweiligen Anlagenteils 13-16; 18 automatisch aufgrund eines mittels der Eingangssensorik 26 generierbaren Signals (Eingangssignal 30; FIG 2) detektierbar ist. Die Bezeichnung der Position der Eingangssensorik 26 als "eingangsseitig" ergibt sich aufgrund der Transportrichtung in der Anlage 10. Am "Eingang" eines Anlagenteils 12-18 kann eine Palette 22 in den Bereich des jeweiligen Anlagenteils 12-18 gelangen, zum Beispiel auf den Arbeitstrum eines Förderbands. Am in Transportrichtung gegenüberliegenden "Ausgang" eines Anlagenteils 12-18 verlässt eine Palette 22 den Bereich des jeweiligen Anlagenteils 12-18.

Wenn die erste Fördervorrichtung 12 - wie hier exemplarisch gezeigt - über keine eigene Eingangssensorik 26 verfügt, kann die Lese- und/oder Identifikationseinrichtung 24 die Funktion einer Eingangssensorik 26 übernehmen, denn die Ermittlung einer Kennung einer Palette 22 bedeutet, dass sich die jeweilige Palette 22 im Bereich der Fördervorrichtung 12 mit der Lese- und/oder Identifikationseinrichtung 24 befindet.

Eine dedizierte Ausgangssensorik ist bei der gezeigten Anlage 10 nicht vorgesehen (und auch nicht zwingend notwendig). Die Eingangssensorik 26 eines in Transportrichtung nachfolgenden Anlagenteils 12-18 (eines dem jeweiligen Anlagenteil 12-18 an dessen Ausgang nachfolgenden Anlagenteils 12-18) übernimmt die Funktion einer solchen Ausgangssensorik. Dann fungiert ein Signal einer Eingangssensorik 26 als Ausgangssignal 32 (FIG 2) für ein in Transportrichtung vorangehendes Anlagenteil 12-18. Alternativ kann bei einzelnen Anlagenteilen 12-18 oder allen Anlagenteilen 12-18 auch eine dedizierte Ausgangssensorik vorgesehen sein, welche dann das Ausgangssignal 32 liefert.

Wesentlich ist, dass für jedes Anlagenteil 12-18 - zumindest für jedes zu simulierende Anlagenteil 12-18 - ein Eingangssignal 30 und ein Ausgangssignal 32 generierbar ist und beim Betrieb der Anlage 10 für jedes derartige Anlagenteil 12-18 ein solches Eingangs- und Ausgangssignal 30, 32 generiert wird. Dies gewährleistet, dass die einzelnen Anlagenteile 12-18 gegeneinander funktional abgrenzbar sind.

FIG 2 zeigt dies noch einmal anhand eines einzelnen Anlagenteils 14 sowie eines nachfolgenden Anlagenteils 16 mit weiteren Einzelheiten. In der von oben nach unten gesehen ersten Darstellung in FIG 2 ist der Moment gezeigt, bei der eine neue Palette 22 in den Bereich des betrachteten Anlagenteils 14 gelangt. Die ankommende neue Palette 22 unterbricht den Lichtstrahl der hier als Eingangssensorik 26 fungierenden Lichtschranke und das von der Eingangssensorik 26 erzeugte Signal ist das oben erwähnte Eingangssignal 30. In der darunter anschließenden mittleren Darstellung (Bezugsziffern aus der vorangehenden Darstellung sind nicht in jedem Fall wiederholt; dies gilt auch für weitere Darstellungen) ist in FIG 2 die Situation gezeigt, dass sich die Palette 22 nach einem Weitertransport in dem betrachteten Anlagenteil 14 bewegt. Die Palette 22 befindet sich "irgendwo" in/auf dem Anlagenteil 14. Die genaue Position ist nicht bekannt. In der an die mittlere Darstellung anschließenden unteren Darstellung ist in FIG 2 der Moment gezeigt, bei der die Palette 22 den Bereich des betrachteten Anlagenteils 14 verlässt. Die Palette 22 unterbricht den Lichtstrahl der hier als Eingangssensorik 26 das nachfolgenden Anlagenteils 16 fungierenden Lichtschranke und das von dieser Eingangssensorik 26 erzeugte Signal ist das oben erwähnte Ausgangssignal 32, denn die Eingangssensorik 26 des nachfolgenden Anlagenteils 16 befindet sich am Eingang des nachfolgenden Anlagenteils 16 und damit auch am Ausgang des betrachteten Anlagenteils 14. Das Ausgangssignal 32 wird unabhängig davon erzeugt, ob der Palette 22, während diese das betrachtete Anlagenteil 14 passiert, eine weitere Palette 22 nachfolgt oder ob weitere Paletten 22 nachfolgen.

Die Darstellung in FIG 2 zeigt im Grunde "einfache" Verhältnisse, nämlich einfache Verhältnisse insoweit, als sich beim Eintritt der neuen Palette 22 in den Bereich des betrachteten Anlagenteils 14 keine weitere Palette 22 oder keine weiteren Paletten 22 im Bereich dieses Anlagenteils 14 befindet bzw. befinden.

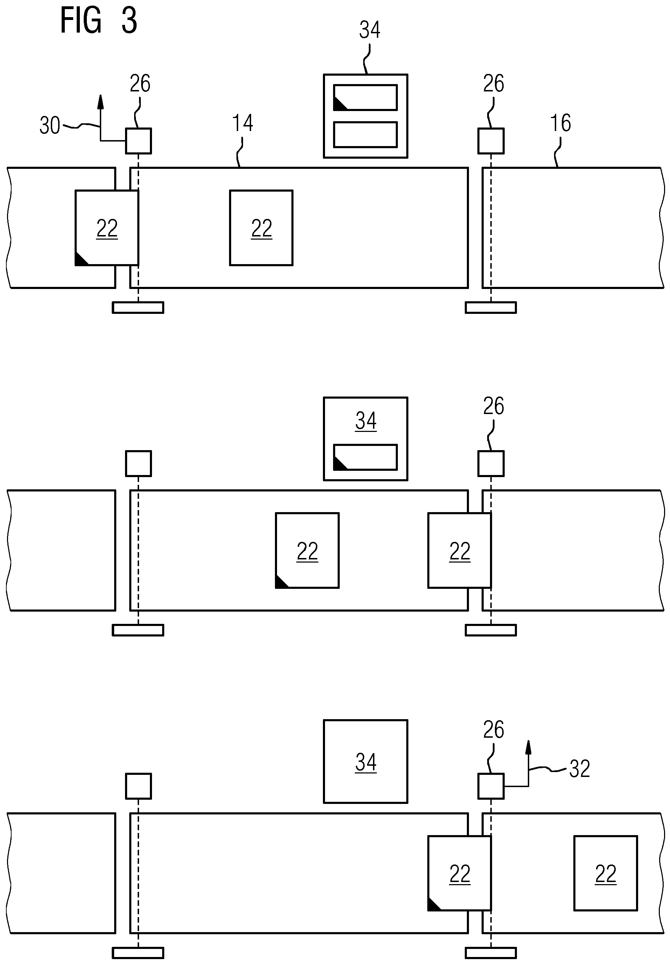

FIG 3 zeigt eine Situation mit zunächst genau einer bereits im Bereich dieses Anlagenteils 14 befindlichen Palette 22. Auch dann wird - FIG 3 oben - beim Eintritt einer neuen Palette 22 mittels der Eingangssensorik 26 das Eingangssignal 30 erzeugt. Die neue Palette 22 ist zur besseren Unterscheidbarkeit mittels einer schraffierten Ecke kenntlich gemacht. Mit dem Eintritt der neuen Palette 22 in den Bereich des betrachteten Anlagenteils 14 wird auch einem diesem Anlagenteil 14 zugeordneten Stapelspeicher 34 ein neuer Eintrag hinzugefügt. Die Verwendung solcher Stapelspeicher 34 ist an sich bekannt und nicht Kern der hier vorgestellten Neuerung. Ein Stapelspeicher 34 ist insbesondere in Form von oder nach Art eines sogenannten FIFO-Stacks organisiert.

Auch dieser neue Eintrag im Stapelspeicher 34 ist zur Unterscheidung mit einer schraffierten Ecke markiert. In dem Stapelspeicher 34 befindet sich aber bereits ein Eintrag (aufgrund der bereits im Bereich des Anlagenteils 14 befindlichen Palette 22). Aufgrund der Anzahl der in dem Stapelspeicher 34 befindlichen Einträge abzüglich dem neuen Eintrag für die neue Palette 22 (hier also genau ein Eintrag) ergibt sich, wie viele Paletten 22 den Bereich des betrachteten Anlagenteils 14 verlassen müssen, bevor die neue Palette 22 am Ausgang des betrachteten Anlagenteils 14 erscheint. Entsprechend wird noch kein Ausgangssignal 32 erzeugt, wenn nach dem Eintritt der neuen Palette 22 in den Bereich des betrachteten Anlagenteils 14 eine erste Palette 22 an dessen Ausgang erscheint. Aufgrund des Inhalts des Stapelspeichers 34 ist klar, dass es sich bei dieser Palette 22 um diejenige Palette 22 handelt, die sich bei Eintritt der neuen Palette 22 in den Bereich des betrachteten Anlagenteils 14 bereits dort befunden hat. Für mehr als eine Palette 22 gilt dies entsprechend, denn jede Palette 22 im Bereich des betrachteten Anlagenteils 14 führt zu einem diese Palette 22 repräsentierenden Eintrag in dem Stapelspeicher 34. Erst wenn die neue Palette 22 selbst am Ausgang des betrachteten Anlagenteils 14 erscheint, wird tatsächlich das Ausgangssignal 32 generiert.

Im Rahmen der Automatisierung der Anlage 10 werden die einzelnen Anlagenteile 12-18 gesteuert und überwacht. Eine als Materialflusssteuerung (material flow controller) fungierende Funktionalität einer jeweiligen Automatisierungslösung 40 ermittelt für jede Palette 22 eine Route durch die Anlage 10 auf der Basis von Vorgaben, welche zum Beispiel von einem übergeordneten Prozessleitsystem stammen.

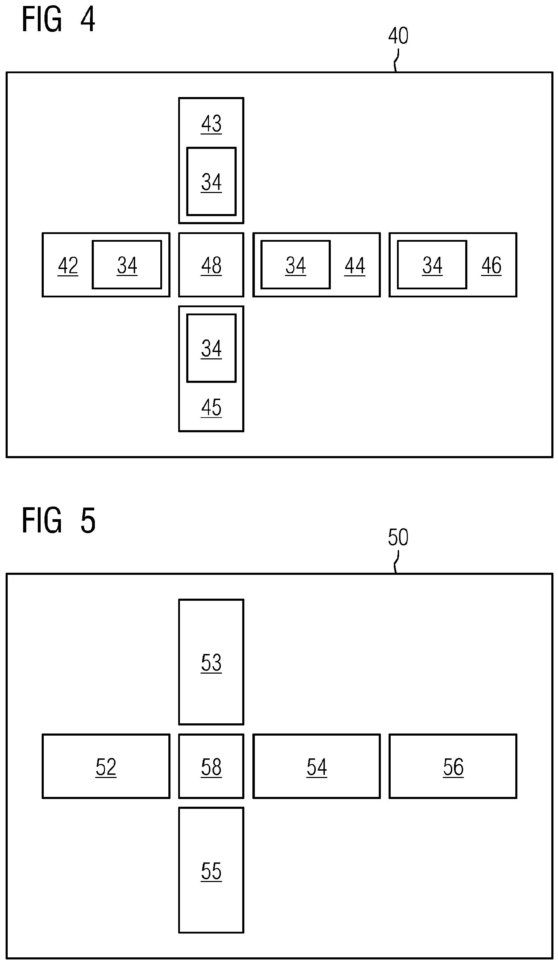

FIG 4 ist eine schematisch vereinfachte Darstellung eines als Automatisierungslösung 40 fungierenden Computerprogramms. Dieses umfasst zum Beispiel einzelne Softwareobjekte 42, 43, 44, 45, 46, 48 oder dergleichen, die jeweils ein reales Anlagenteil 12-18 repräsentieren und zu dessen Steuerung und/oder Überwachung bestimmt sind. Die Darstellung in FIG 4 ist nur im Interesse einer leichteren Zuordnung mit demselben Layout wie in FIG 1 erfolgt. Jeweils ein Softwareobjekt 42-48 repräsentiert ein Anlagenteil 12-18 und die Softwareobjekte 42-48 sind zur Herstellung eines möglichst einfachen Bezugs zu dem jeweils repräsentierten Anlagenteil 12-18 mit den Bezugsziffern 42-48 bezeichnet (= Bezugsziffer Anlagenteil + 30). Im Interesse einer besseren Lesbarkeit werden die Softwareobjekte 42-48 im Folgenden je nach jeweils repräsentiertem Anlagenteil 12-18 ebenfalls als Fördervorrichtung 42, 43, 44, 45, 46 oder Drehvorrichtung 48 sowie einzeln oder zusammen als Anlagenteil 42-48 bezeichnet. Ob ein reales Anlagenteil 12-18 oder eine Software-Entsprechung innerhalb der Automatisierungslösung 40 bezeichnet wird, ergibt sich im Folgenden also nur anhand der jeweils verwendeten Bezugsziffer.

Wie bereits im Zusammenhang mit der Erläuterung der Darstellungen in FIG 2 und FIG 3 angemerkt, wird eine Palette 22 im Rahmen einer Bewegung durch die Anlage 10 bei jedem Durchtritt durch eine Eingangssensorik 26 erkannt. Dabei wird die mittels der Lese- und/oder Identifikationseinrichtung 24 aufgenommene Kennung der Palette 22 (oder eine auf Basis dieser Kennung generierte Kennung) an das jeweilige Anlagenteil 42-48 übergeben, nämlich an einen der datentechnischen Entsprechung 42-48 (FIG 4) des jeweiligen realen Anlagenteils 12-18 innerhalb der Automatisierungslösung 40 zugeordneten Stapelspeicher 34. Daraus ergibt sich die Position der Palette 22 innerhalb der Anlage 10. Jede Fördervorrichtung 12-16 transportiert eine Palette 22 zumindest bis zu deren Ende und damit bis zu einem nachfolgenden Anlagenteil 13-18. Beim Verlassen der jeweiligen Fördervorrichtung 12-16 wird der die jeweilige Palette 22 repräsentierende Eintrag aus dem jeweiligen Stapelspeicher 34 entnommen. Der Inhalt aller Stapelspeicher 34 wird im Folgenden als Prozessabbild bezeichnet.

Anhand des jeweiligen Inhalts eines solchen Stapelspeichers 34 ergibt sich demnach auch eine "Position" (im Sinne einer Reihenfolge) der Palette 22 in Relation zu einer oder mehreren weiteren Paletten 22 im selben Anlagenteil 12-18. Es ergibt sich also, ob die Palette 22 (vom Eingang oder vom Ausgang des Anlagenteils 12-18 aus gesehen) die erste, zweite usw. Palette 22 im Bereich des jeweiligen Anlagenteils 12-18 ist.

Im Ergebnis ist damit im Rahmen der Automatisierung zu jedem Zeitpunkt bekannt, wie viele Paletten 22 und welche Paletten 22 (identifiziert durch die jeweilige Kennung) sich im Bereich der Anlage 10 befinden. Darüber hinaus ist zu jedem Zeitpunkt bekannt, wie viele und welche Paletten 22 sich im Bereich genau eines Anlagenteils 12-18 befinden. Nicht bekannt ist allerdings die jeweilige exakte Position einer Palette 22. Für viele Automatisierungslösungen und Simulationen ist die Kenntnis der jeweiligen exakten Position nicht notwendig. Wenn es allerdings um eine Optimierung des Durchsatzes der Anlage 10 geht, ist eine solche Kenntnis der genauen Position (und nicht nur der Reihenfolge) notwendig.

Bei einer Synchronisation einer Fördervorrichtung 12-16 oder einer Förderstrecke mit einer Simulation der Anlage 10 reicht es demgemäß nicht aus, die jeweiligen Prozessdaten, also zum Beispiel die Inhalte der Stapelspeicher 34, an die Simulation zu übergeben. Vielmehr ist für die Simulation die Kenntnis nicht nur des jeweiligen Anlagenteils 12-18, in dessen Bereich sich die oder eine Palette 22 befindet, sondern vielmehr die Kenntnis der exakten Position der oder jeder Palette 22 innerhalb des jeweiligen Anlagenteils 12-18 notwendig.

Ähnlich wie die Darstellung in FIG 4 zeigt die Darstellung in FIG 5 nochmals weitere Softwareobjekte 52-58, nämlich Softwareobjekte 52-58, mittels derer im Rahmen eines Simulationsprogramms 50 eine Simulation einer Anlage 10 wie in FIG 1 erfolgt. Auch hier ist nur zur leichteren Zuordnung die Darstellung mit demselben Layout wie in FIG 1 erfolgt und jeweils ein Softwareobjekt 52-58 repräsentiert ein reales Anlagenteil 12-18. Ebenso sind auch hier die Softwareobjekte 52-58 zur möglichst einfachen Herstellung eines Zusammenhangs mit dem jeweils repräsentierten realen Anlagenteil 12-18 mit den Bezugsziffern 52-58 bezeichnet (= Bezugsziffer Anlagenteil + 40). Auch diese Softwareobjekte 52-58 werden im Folgenden je nach jeweils simuliertem Anlagenteil 12-18 ebenfalls als Fördervorrichtung 52, 53, 54, 55, 56 oder Drehvorrichtung 58 oder einzeln oder zusammen als Anlagenteil 52-58 bezeichnet. Ob ein reales Anlagenteil 12-18 oder eine Software-Entsprechung des Simulationsprogramms 50 bezeichnet wird, ergibt sich demgemäß auch hier nur anhand der jeweils verwendeten Bezugsziffer.

Eine einfache, aber oftmals nicht ausreichende Möglichkeit zur Synchronisation einer Fördervorrichtung 12-16 mit einer Simulation der Anlage 10 erfolgt - wie erwähnt - durch Übergabe der Prozessdaten an die Simulation. Dafür werden zum Beispiel die Inhalte der Stapelspeicher 34 an die Simulation übergeben. Damit ist im Bereich des Simulationsprogramms 50 bekannt, wie viele Paletten 22 sich in der Anlage 10 befinden und weiterhin ist bekannt, welche Palette 22 (anhand der Kennung) oder welche Paletten 22 sich im Bereich welches Anlagenteils 12-18 befindet bzw. befinden. Die jeweilige genaue Position einer Palette 22 oder jeder Palette 22 ist damit für die Simulation noch nicht bekannt. Dies ist aber für eine Simulation der Anlage 10 sowie eine Simulation eines Durchlaufs einer Palette 22 oder mehrerer Paletten 22 durch die Anlage 10 essentiell.

Grundsätzlich besteht die Möglichkeit, im Rahmen der Simulation die genaue Position einer Palette 22 aufgrund des bekannten Zeitpunkts des Übergangs einer Palette 22 in den Bereich einer Fördervorrichtung 12-16 (Zeitpunkt der Generierung des Eingangssignals 30) sowie der Geschwindigkeit der Fördervorrichtung 12-16 zu ermitteln. Die Simulation kann demnach keine Paletten 22 erfassen, die sich beim Start der Simulation bereits im Bereich einer Fördervorrichtung 12-16 befinden, weil der Zeitpunkt, zu dem für eine solche Palette 22 ein Eingangssignal 30 generiert wurde oder generiert werden konnte, bereits verstrichen ist. Die Position solcher Paletten 22 lässt sich für die Simulation nicht ermitteln. Für den Beginn der Simulation ist also erforderlich, dass sich keine Palette 22 oder Paletten 22, deren genaue Position nicht ermittelbar ist, im Bereich eines Anlagenteils 12-18 der simulierten Anlage 10 befinden. Die Simulation muss also so lange "warten", bis diese Bedingung erfüllt ist. Nach Verstreichen einer solchen, hinsichtlich ihrer Dauer grundsätzlich nicht im Voraus bestimmbaren Wartezeit besteht die Möglichkeit einer Synchronisation eines realen Anlagenteils 12-18 der jeweiligen Anlage 10 mit ihrem jeweiligen Pendant 52-58 in der Simulation.

Bei einer komplexen Anlage 10 mit mehreren zu simulierenden Anlagenteilen 12-18, insbesondere Fördervorrichtungen 12-16, müssen alle Anlagenteile 12-18 mit ihren jeweiligen Pendants 52-58 in der Simulation synchronisiert werden. Weil eine Palette 22, deren Position noch nicht - wie oben beschrieben - für die Simulation 40 ermittelt wurde, oftmals nach Verlassen des jeweiligen Anlagenteils 12-18 in den Bereich eines im technischen Prozess nachfolgenden Anlagenteils 12-18 gelangt und dann dort deren Position nicht bekannt ist, müsste die Anlage 10 im Grunde "leergefahren" werden, bevor eine Simulation beginnen kann. Ein solches Leerfahren reduziert den Durchsatz der Anlage 10 und damit deren Effizienz erheblich. Wenn für den Beginn einer Simulation ein Leerfahren einer Anlage 10 notwendig sein sollte, lässt sich einem Betreiber einer Anlage 10 eine Simulation der Anlage 10 kaum anbieten. Optimierungspotential bleibt damit unerkannt. Die Herausforderung besteht also darin, den Zeitpunkt zu bestimmen, zu dem die Simulation in einer Art und Weise beginnen kann, dass alle in der Anlage befindlichen Paletten 22 von der Simulation erfasst sind, und zwar jeweils mit ihrer korrekten Position in der Anlage 10 und im Bereich eines jeweiligen Anlagenteils 12-18.

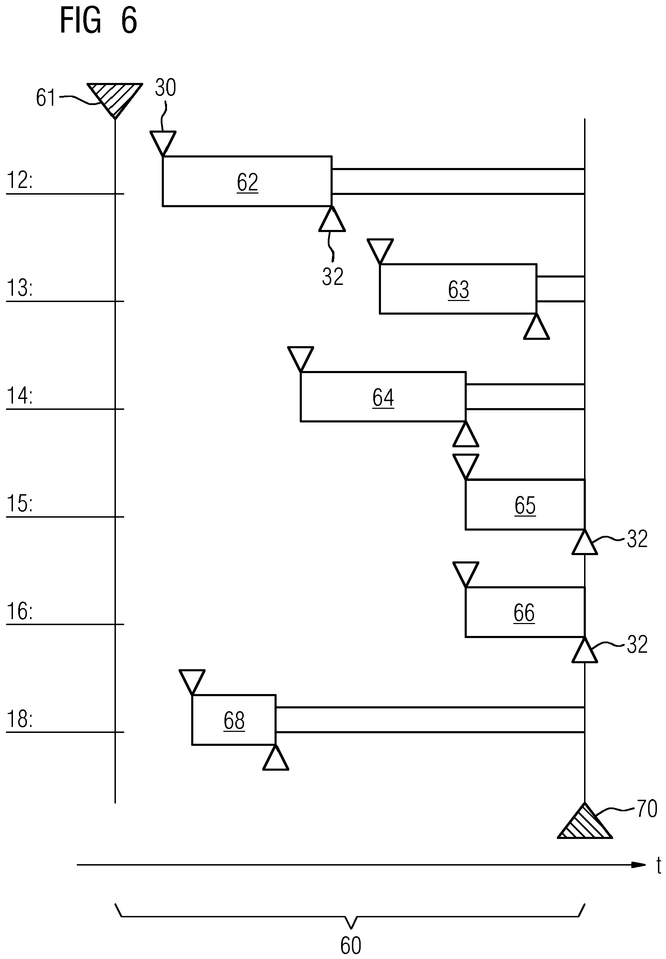

Zur Erläuterung des hier zur Lösung dieses Problems vorgeschlagenen Ansatzes wird auf die Darstellung in FIG 6 verwiesen. Diese zeigt ein Zeitdiagramm zur Ermittlung eines Startpunkts für die Simulation. Über der Zeit t ist ein Synchronisationsintervall 60 gezeigt, dessen Dauer zunächst nicht bekannt ist und sich anhand von Vorgängen im parallel weiterlaufenden Prozess auf der jeweiligen Anlage 10 ergibt. In dem Zeitdiagramm sind - hier "zeilenweise" - die einzelnen Anlagenteile 12-18 erfasst. Dies ist durch die Wiederholung der die Anlagenteile 12-18 bezeichnenden Bezugsziffern am linken Rand des Zeitdiagramms veranschaulicht. Für die Ermittlung des Startpunkts für die Simulation nach dem hier vorgeschlagenen Ansatz ist wesentlich, dass die einzelnen Anlagenteile 12-18 funktionale Einheiten bilden. Dies ist beim eingangs gewählten Beispiel gegeben, indem im Rahmen der Automatisierungslösung 40 aufgrund einzelner Eingangssignale 30 ermittelbar ist, ob und wann eine Palette 22 in den Bereich des jeweiligen Anlagenteils 12-18 gelangt und indem anhand einzelner Ausgangssignale 32 genauso ermittelbar ist, ob und wann eine Palette 22 den Bereich des jeweiligen Anlagenteils 12-18 verlässt.

Das Synchronisationsintervall 60 oder der Beginn der Synchronisation wird mittels eines zum Beispiel vom Simulationsprogramm 50 oder einem dem Simulationsprogramm 50 übergeordneten Computerprogramm automatisch erzeugten Startsignals 61 gestartet. Aufgrund des Startsignals 61 übermittelt das als Automatisierungslösung 40 fungierende Computerprogramm 40 oder ein diesem übergeordnetes Computerprogramm an die Repräsentanten aller Anlagenteile 42-48 den Beginn des Synchronisationsintervalls 60. Daraufhin wird für den jeweiligen realen Anlagenteil 12-18 durch dessen Pendant 42-48 innerhalb der Automatisierungslösung 40 überwacht, wann eine neue Palette 22 in den Bereich des jeweiligen Anlagenteils 12-18 gelangt. Dies ist automatisch anhand eines Eingangssignals 30, also zum Beispiel anhand eines beim Durchtritt der neuen Palette 22 durch eine Lichtschranke am Eingang des jeweiligen Anlagenteils 12-18 generierten Eingangssignals 30, erkennbar. Das Startsignal 61 aktiviert also die Generierung solcher Eingangssignale 30 oder die Auswertung einzelner von einer jeweiligen Eingangssensorik 26 bei jedem Durchtritt einer Palette 22 generierter Signale jeweils als Eingangssignal 30. Das Startsignal 61 aktiviert ebenfalls die Generierung einzelner Ausgangssignale 32 oder die Auswertung eines von einer als Ausgangssensorik 26 fungierenden Sensorik generierten Signals als Ausgangssignal 32.

Ein aufgrund einer neuen Palette 22 erzeugtes Eingangssignal 30 startet automatisch ein anlagenteilspezifisches Überwachungsfenster 62-68. Für jedes Anlagenteil 12-18 ergibt sich im Laufe des Synchronisationsintervalls 60 ein Überwachungsfenster 62-68. Auch hier sind die Überwachungsfenster 62-68 in der Darstellung mit Bezugsziffern bezeichnet, die mit den Bezugsziffern des jeweiligen Anlagenteils 12-18 korreliert sind (Bezugsziffer Anlagenteil + 50).

Ein Überwachungsfenster 62-68 wird automatisch beendet, wenn diejenige Palette 22, aufgrund derer das Überwachungsfenster 62-68 gestartet wurde, das jeweilige Anlagenteil 12-18 wieder verlässt. Dies ist dann der Fall, wenn zu der jeweiligen Palette 22 das Ausgangssignal 32 erzeugt wird.

Mit dem Erhalt des Ausgangssignals 32 besteht die Gewissheit, dass sich im Bereich des jeweiligen Anlagenteils 12-18 keine "unbekannten" Paletten 22 mehr befinden, also keine Paletten 22, deren Position für die Simulation nicht ermittelt werden könnte.

In der Darstellung in FIG 6 sind die jeweils den Beginn und das Ende eines Überwachungsfenster 62-68 bestimmenden Eingangssignale 30 und Ausgangssignale 32 jeweils als Dreiecke dargestellt, wobei im Interesse der Übersichtlichkeit der Darstellung nur einzelne dieser Dreiecke bezeichnet sind. Ein zeitlich letztes Ausgangssignal 32 - hier das zu dem Überwachungsfenster 66 für die fünfte Fördervorrichtung 16 eingehende Ausgangssignal 32 - bestimmt das Ende des Synchronisationsintervalls 60.

Als letztes Ausgangssignal 32 wird dasjenige Ausgangssignal 32 bezeichnet, welches das letzte zu einem der Anlagenteile 12-18 der zu simulierenden Anlage 10 gestartete Überwachungsfenster 62-68 beendet. Die Anzahl der Überwachungsfenster 62-68 ergibt sich aufgrund der Anzahl der im obigen Sinne funktionale Einheiten bildenden Anlagenteile 12-18. Deren Anzahl ist bekannt. Damit ist auch bekannt, wie viele Überwachungsfenster 62-68 während des Synchronisationsintervalls 60 (durch den Erhalt des jeweiligen Eingangssignals 30) gestartet werden müssen. Mit der bekannten Anzahl von zu erwartenden Überwachungsfenstern 62-68 kann auch automatisch ermittelt werden, wann zu diesen das letzte Ausgangssignal 32 eintrifft.

Aufgrund des letzten Ausgangssignals 32 wird zum Beispiel vom Simulationsprogramm 50 oder einem dem Simulationsprogramm 50 übergeordneten Computerprogramm automatisch ein Synchronisationssignal 70 generiert. Dieses startet automatisch die eigentliche Simulation der jeweiligen Anlage 10 und zum Beispiel eine entsprechende Teilfunktionalität des Simulationsprogramms 50.

Optional wird zusätzlich zu jeweils einem Überwachungsfenster 62-68 zu jedem Anlagenteil 12-18 auch ein (nicht gezeigtes) Überwachungsfenster für ein etwaiges übergeordnetes, zyklisch ausgeführtes Computerprogramm gestartet. Wenn beim Erhalt des o.g. letzten Ausgangssignals 32 ein Zyklus eines solchen Computerprogramms noch nicht abgeschlossen ist, kann die Simulation nicht mit diesem synchronisiert werden. Entsprechend wird bei einer besonderen Ausführungsform des hier vorgeschlagenen Ansatzes nach dem Erhalt des letzten Ausgangssignals 32 auch das Zyklusende eines solchen etwaigen übergeordneten Computerprogramms abgewartet und erst dann das Synchronisationssignal 70 generiert.

Bereits während des Synchronisationsintervalls 60 wird (durch das Simulationsprogramm 50 oder durch ein dem Simulationsprogramm 50 übergeordnetes Computerprogramm) zu jeder in den Bereich eines Anlagenteils 12-18 gelangenden Palette 22 der Zeitpunkt des Eintritts in den Bereich des jeweiligen Anlagenteils 12-18 erfasst (zeitstempel). Diese Erfassung jeweils eines Zeitstempels zu jeder in der Anlage 10 befindlichen Palette 22 wird auch während der Simulation fortgesetzt. Aufgrund des initialen Zeitstempels und aufgrund der bekannten Transportgeschwindigkeit des jeweiligen Anlagenteils 12-18 kann für die Simulation die exakte Position jeder Palette 22 innerhalb der Anlage 10 sowie in oder auf dem jeweiligen Anlagenteil 12-18 ermittelt werden und im Rahmen der Simulation zum Beispiel graphisch dargestellt werden.

Die Simulation der einzelnen realen Anlagenteile 12-18 erfolgt mittels der Softwareobjekte 52-58 des Simulationsprogramms 50. Grundsätzlich kann die Simulation der einzelnen realen Anlagenteile 12-18 auch mittels der Softwareobjekte 42-48 des als Automatisierungslösung 40 fungierenden Computerprogramms erfolgen. Dann ist das als Automatisierungslösung 40 fungierende Computerprogramm gleichzeitig das Simulationsprogramm 50. Während der Simulation erhalten die Softwareobjekte 52-58 (oder die Softwareobjekte 42-48) die von der Eingangssensorik 26 bei der Detektion einer Palette 22 generierten Signale, so dass die oben erwähnten Zeitstempel erzeugt werden können. Während der Simulation erhalten die Softwareobjekte 52-58 (oder die Softwareobjekte 42-48) ebenfalls die Inhalte der Stapelspeicher 34, so dass im Rahmen der Simulation weitere Informationen zu den im Bereich der Anlage 10 befindlichen einzelnen Paletten 22 bekannt sind und diese zumindest unterscheidbar sind. Auf die konkrete Art der Simulation, zum Beispiel eine Simulation in Form einer graphischen Visualisierung des Durchlaufs einer Vielzahl von Paletten 22 durch die Anlage 10, kommt es im Weiteren im Grunde nicht an. Wesentlich ist, dass mit dem hier vorgeschlagenen Ansatz eine Simulation aus dem laufenden Betrieb einer Anlage 10 gestartet werden kann.

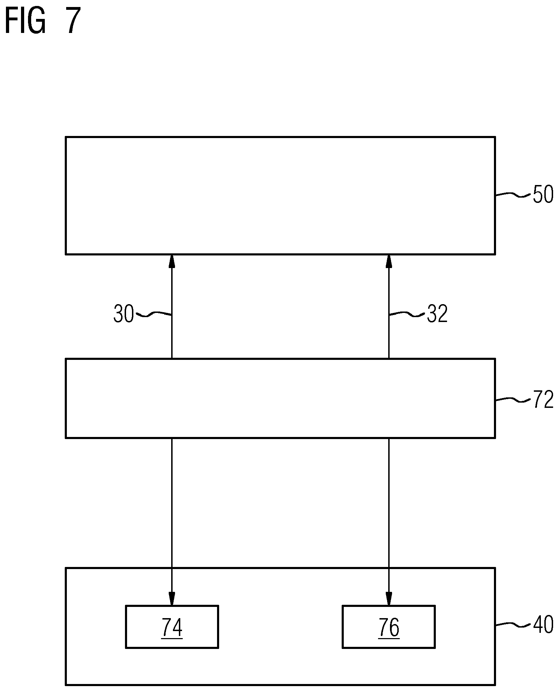

Die bisherige Beschreibung hat vorausgesetzt, dass mittels der Eingangssensorik 26 (oder mittels einer Eingangssensorik 26 und einer Ausgangssensorik) erzeugte Signale, speziell die als Eingangs- oder Ausgangssignale 30, 32 fungierenden Signale von dem als Automatisierungslösung 40 fungierenden Computerprogramm (Steuerungsprogramm) entweder an ein separates Simulationsprogramm 50 übermittelt werden oder intern an eine die Simulation erzeugende Teilfunktionalität eines solchen Steuerungsprogramms übermittelt werden. In beiden Fällen ist eine entsprechende Anpassung des als Automatisierungslösung 40 fungierenden Steuerungsprogramms notwendig. Ein spezieller Aspekt der hier vorgeschlagenen Neuerung zielt darauf ab, solche Anpassungen der Automatisierungslösung 40 und damit Eingriffe in eine laufende Automatisierungslösung 40 zu vermeiden. Dazu zeigt die Darstellung in FIG 7 das Simulationsprogramm 50 und das als Automatisierungslösung 40 fungierende Steuerungsprogramm 40. Funktional zwischen diesen beiden ist ein als Schnittstellenschicht 72 fungierendes Computerprogramm vorgesehen, welches die Automatisierungslösung 40 überwacht und aufgrund der Überwachung resultierende Ergebnisse an das Simulationsprogramm 50 übermittelt. Die Überwachung besteht zum Beispiel darin, dass mittels der Schnittstellenschicht 72 der Inhalt vorgegebener oder vorgebbarer, von der Automatisierungslösung 40 verwendeter Speicherbereiche 74, 76 überwacht wird. Bei den überwachten Speicherbereichen 74, 76 handelt es sich zum Beispiel um solche Speicherbereiche 74, 76, in denen der Status eines Ausgangs (Output) einer Eingangssensorik 26 eines Anlagenteils 12-18 sowie einer Eingangssensorik 26 eines diesem Anlagenteil nachfolgenden Anlagenteils 12-18 erfasst wird. Der Inhalt dieser Speicherbereiche 74, 76 repräsentiert damit - zumindest nach der Generierung des Startsignals 61 - die oben erwähnten Eingangs- und Ausgangssignale 30, 32 dieses Anlagenteils 12-18.

In der Darstellung in FIG 7 ist exemplarisch gezeigt, dass aufgrund der Überwachung der Speicherbereiche 74, 76 Signale an das Simulationsprogramm 50 übermittelt werden, die dort als Eingangssignal 30 und Ausgangssignale 32 eines Anlagenteils 12-18 der zu simulierenden Anlage 10 ausgewertet werden. In gleicher Art und Weise sind mittels der Schnittstellenschicht 72 auch Signale an das Simulationsprogramm 50 übermittelbar, die dort die Erfassung eines Zeitstempels für eine in den Bereich eines Anlagenteils 12-18 gelangende Palette 22 bewirken. Selbstverständlich wird bei einer Überwachung einer Automatisierungslösung 40 für eine Anlage 10 mit mehreren jeweils funktionale Einheiten bildenden Anlagenteilen 12-18 für jedes Anlagenteil 12-18 jeweils zumindest ein Speicherbereich 74, 76 überwacht. Insoweit kann die Schnittstellenschicht 72 eine der Anzahl der Anlagenteile 12-18 entsprechende Anzahl von Schnittstellenschichtobjekten (nicht gezeigt) umfassen, wobei jedes derartige Objekt zumindest einen von einem jeweils ein Anlagenteil 12-18 repräsentierenden Softwareobjekt 42-48 verwendeten Speicherbereich 74, 76 überwacht.

Durch die Verwendung einer solchen Schnittstellenschicht 72 ist ein Eingriff in die Automatisierungslösung 40 nicht erforderlich. Die Automatisierungslösung 40 und das Simulationsprogramm 50 sind vielmehr vollständig voneinander entkoppelt und Wechselwirkungen zwischen dem Simulationsprogramm 50 und der Automatisierungslösung 40 sind ausgeschlossen. Damit ist gewährleistet, dass die jeweilige Anlage 10 unabhängig von der Simulation weiterlaufen kann, selbst dann, wenn die Simulation zum Beispiel aufgrund von Programmfehlern im Simulationsprogramm 50 abgebrochen wird.

Das Simulationsprogramm 50 kann auch in der sogenannten Cloud ausgeführt werden. Dann fungiert zum Beispiel eine Schnittstellenschicht 72 gemäß FIG 7 als Schnittstelle zwischen der Automatisierungslösung 40 und der Cloud. In der Cloud können in grundsätzlich an sich bekannter Art und Weise die je nach Art und Umfang der Simulation der jeweiligen Anlage 10 notwendigen Ressourcen, insbesondere Rechenleistung und Speicherbedarf, belegt werden. Darüber hinaus können im Rahmen der Simulation entstehende Daten in der Cloud effizient gespeichert werden und dort zum Beispiel unterschiedlichsten Experten zur Verfügung gestellt werden, sodass verschiedenste Optimierungsmöglichkeiten geprüft und/oder kombiniert werden können.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zur Simulation einer technischen Anlage 10 und ein Computerprogramm (Simulationsprogramm) 50 mit einer Implementation des Verfahrens. Die Simulation wird automatisch mittels und aufgrund eines automatisch erzeugen Synchronisationssignals 70 gestartet. Das Synchronisationssignal 70 wird wiederum automatisch erzeugt, wenn für jeden für die Simulation relevanten Anlagenteil 12-18 der Anlage 10 sichergestellt ist, dass eine Einheit 22, deren Eintritt in den Bereich eines Anlagenteils 12-18 erfasst wurde, diesen Anlagenteil 12-18 wieder verlassen hat. Dann ist sichergestellt, dass alle Anlagenteile 12-18 entweder "leer" sind oder dass sich nur noch bekannte Einheiten 22 in oder auf den einzelnen Anlagenteilen 12-18 befinden. Dies wird durch das Starten und Beenden jeweils eines Überwachungsfensters 62-68 für jeden Anlagenteil 12-18 überwacht. Ein Überwachungsfenster 62-68 wird beim Eintritt einer Einheit 22 in den Bereich eines Anlagenteils 12-18 gestartet und beendet, wenn diese Einheit 22 den Bereich des jeweiligen Anlagenteils 12-18 wieder verlässt. Beim Beenden des letzten Überwachungsfensters 62-68 ist die Situation gegeben, dass alle Anlagenteile 12-18 entweder "leer" sind oder dass sich nur noch bekannte Einheiten 22 in oder auf den einzelnen Anlagenteilen 12-18 befinden. Dann wird das Synchronisationssignal 70 erzeugt und die Simulation gestartet. Die Simulation kann dann synchron zum Betrieb der jeweiligen Anlage 10 erfolgen und nicht nur den Betrieb einzelner Anlagenteile 12-18 und davon umfasster Aggregate zum Beispiel im Rahmen einer graphischen Simulation darstellen, sondern auch eine Bewegung einzelner Einheiten 22 oder mehrerer Einheiten 22 durch die Anlage 10 darstellen.

## Patentansprüche

1. Verfahren zur Simulation einer technischen Anlage (10),
wobei die Simulation mittels eines automatisch erzeugten Synchronisationssignals (70) gestartet wird,
wobei das Synchronisationssignal (70) auf Basis einer Mehrzahl von Eingangs- und Ausgangssignalen (30, 32) generiert wird,
wobei ein Eingangssignal (30) einen Eintritt einer beim Betrieb der Anlage (10) mittels der Anlage (10) transportierten Einheit (22) in den Bereich eines Anlagenteils (12-18) signalisiert,
wobei ein Ausgangssignal (32) signalisiert, wenn eine beim Betrieb der Anlage (10) transportierte Einheit (22) den Bereich eines Anlagenteils (12-18) verlässt,
wobei ein Startsignal (61) den Beginn eines Synchronisationsintervalls (60) sowie eine Überwachung solcher Eingangs- und Ausgangssignale (30, 32) auslöst,
wobei während des Synchronisationsintervalls (60) beim Erhalt eines Eingangssignals (30) für ein Anlagenteil (12-18) für diesen Anlagenteil (12-18) ein Überwachungsfenster (62-68) beginnt,
wobei während des Synchronisationsintervalls (60) beim Erhalt eines Ausgangssignals (32) für ein Anlagenteil (12-18) das Überwachungsfenster (62-68) dieses Anlagenteils (12-18) beendet wird und
wobei auf Basis desjenigen Ausgangssignals (32), welches das letzte Überwachungsfenster (62-68) beendet, das Synchronisationsintervall (60) beendet und das Synchronisationssignal (70) erzeugt wird.

2. Verfahren nach Anspruch 1,
wobei zu jedem Signal einer Eingangssensorik (26), welches nach Erhalt eines ersten, den Beginn eines Überwachungsfensters (62-68) auslösenden Eingangssignals (30) eingeht,ein Zeitstempel erfasst wird und
wobei für die Simulation der Anlage (10) auf Basis eines solchen Zeitstempels und einer jeweiligen Transportgeschwindigkeit eines Anlagenteils (12-18) eine Position einer beim Betrieb der Anlage (10) mittels der Anlage (10) transportierten Einheit (22) in oder auf dem jeweiligen Anlagenteil (12-18) ermittelt wird.

3. Verfahren nach Anspruch 1 oder 2,
wobei die Erzeugung des Startsignals (61) und des Synchronisationssignals (70) automatisch durch ein zur Simulation der Anlage (10) bestimmtes Simulationsprogramm (50) erfolgt und
wobei jedes Eingangs- und Ausgangssignal (30, 32) von einer zur Steuerung und/oder Überwachung der Anlage (10) bestimmten Automatisierungslösung (40) an das Simulationsprogramm (50) übermittelt wird.

4. Verfahren nach Anspruch 3,
wobei die Übermittlung der Eingangs- und Ausgangssignale (30, 32) von der Automatisierungslösung (40) an das Simulationsprogramm (50) mittels einer Schnittstellenschicht (72) erfolgt und
wobei mittels der Schnittstellenschicht (72) eine Überwachung einzelner von der Automatisierungslösung (40) verwendeter Speicherbereiche (72, 74) erfolgt.

5. Verfahren nach Anspruch 4,
wobei die Überwachung der von der Automatisierungslösung (40) verwendeten Speicherbereiche (72, 74) durch die Schnittstellenschicht (72) erfolgt, indem mittels der Schnittstellenschicht (72) die Inhalte der überwachten Speicherbereiche (72, 74) regelmäßig ausgelesen werden und bei einer Änderung eines Inhalts eines Speicherbereichs (72, 74) ein Eingangs- oder Ausgangssignal (30, 32) für das Simulationsprogramm (50) erzeugt wird.

6. Computerprogramm (50) mit Programmcodemitteln, um alle Schritte von jedem beliebigen der Ansprüche 1 bis 5 durchzuführen, wenn das Computerprogramm (50) auf einer zur Simulation der Anlage (10) bestimmten Computerhardware ausgeführt wird.
